(19) Europäisches Patentamt
European Patent Office
Office européen des brevets

(11) Publication number: **0 248 126 B1**

# EUROPEAN PATENT SPECIFICATION

(45) Date of publication of patent specification: **03.07.91**

(51) Int. Cl.⁵: **B23H 7/04**

(21) Application number: **86304143.0**

(22) Date of filing: **30.05.86**

(54) Traveling wire electric discharge machine monitor.

(43) Date of publication of application:
**09.12.87 Bulletin 87/50**

(45) Publication of the grant of the patent:
**03.07.91 Bulletin 91/27**

(84) Designated Contracting States:
**BE CH DE FR GB LI SE**

(56) References cited:
**DE-A- 3 327 470**

**PATENTS ABSTRACTS OF JAPAN, vol. 9, no. 261 (M-422)[1984], 18th October 1985; & JP-A-60 108 226 (MITSUBISHI DENKI K.K.) 13-06-1985**

(73) Proprietor: **Corning Glass Works**
**Sullivan Park FR-212**
**Corning New York 14831(US)**

(72) Inventor: **Hayes, David Valentine**
**333 Beartown Road**
**Painted Post New York 14870(US)**
Inventor: **Majestic, Peter John**
**RD No 2, Box 432**
**Corning New York 14830(US)**

(74) Representative: **Boon, Graham Anthony et al**
**Elkington and Fife Beacon House 113 Kingsway**
**London, WC2B 6PP(GB)**

## Description

This invention relates to monitoring electrical processes and, in particular, to monitoring the condition of the contacts in a traveling wire electric discharge machine.

A traveling wire electric discharge machine is used for highly accurate electrical cutting of metal, particularly alloys noted for their strength and hardness. Machines of this type are manufactured and/or sold by companies such as Agie of Switzerland and Mitsubishi of Japan.

In a traveling wire electric discharge machine of the type being considered, an erosion electrode is formed by a continuously advanced, or "traveling", wire. The traveling wire electrode and electrically conductive workpiece are connected across the poles of a pulsed direct current power supply. When the workpiece and traveling wire are brought together and a pulse of direct current is supplied by the power source, minute quantities of the workpiece proximal to the traveling wire electrode are removed by the current flow. In this way, the conductive workpiece is machined directly by electrical discharge.

In the electric discharge machines supplied by the two above-identified manufacturers, a pair of contacts are provided to electrically couple the traveling wire electrode with a pair of branch power source cables. The contacts are located on either side of the workpiece to balance the electric charge on the wire at the workpiece. The workpiece is coupled by means of another cable to the remaining pole of the power source.

The current flow is proportional to a number of factors including the amount of material removed from the workpiece and power transfer loss at the contacts. These power losses are due, in part, to resistance in the electrical contacts. This resistance is a function of surface contact area and mechanical and electrical wear. Premature or abnormal wear of one of the contacts may cause a taper cut in the workpiece, unstable erosion of the workpiece material around the traveling wire electrode, current leakage and control loop errors. These contacts are often constructed from a carbide material to enhance wear and are often referred to as carbide contacts or "carbides".

The conventional means for monitoring the quality of the contacts has been to observe quality of the cut made by the machine. Deterioration of a contact may not be detected until after a workpiece is ruined. Therefore, it would be desirable to be able to determine the condition of the contacts before a workpiece is ruined and, preferably, during the operation of the machine.

JP-A-60-108226 describes monitoring the condition of the contacts in a traveling wire electric discharge machine by applying an AC voltage to the contacts and measuring a voltage drop which occurs in a circuit connected thereto. A very different technique is described in US-A-4559432 which provides a monitoring device as defined in the preamble of claim 1 herein. This operates by detecting the current pulses actually used to effect the machining.

According to the present invention there is provided a device of the type described in US-A-4559432 characterized in that said display means comprises an integrating capacitor coupled to said transformer for integrating the voltage pulses of said transformer signal to generate an analog voltage level; a display device for indicating changes in the current carried by said power cable; and circuit means for coupling the integrating capacitor and the display device and driving the display device in response to said analog voltage level.

In a preferred embodiment, each of the pair of contacts typically provided in these machines is monitored. For that reason, a second sensor is provided in the form of a second transformer adapted for inductive coupling with a second power cable.

The remotely positionable display includes at least one display device coupled to and driven by at least one of the two sensors. For ease in simultaneously monitoring the condition of the pair of contacts, the display preferably includes differencing circuitry for generating a difference signal related to the difference between the currents carried by each of the first and second power cables. A display device, in particular a null meter, is coupled with the difference circuit and driven by the signal for indicating the difference between the first and second currents passed along the first and second power cables to the two contacts.

Alternatively, or, in addition, two display devices, such as voltmeters, are coupled through appropriate circuitry to separate one of the two sensors for indicating voltages proportional to the currents passed through each of the first and second power cables.

These and other aspects of the invention will be better understood from the following description of the preferred embodiment and accompanying figures.

Fig. 1 depicts diagrammatically a traveling wire electric discharge machine ("EDM") and monitor of the subject invention.

Fig. 2 depicts diagrammatically the form of the direct current pulses outputted by the EDM power supply.

Fig. 3 depicts schematically and diagrammatically the components of the operator display box of the monitor.

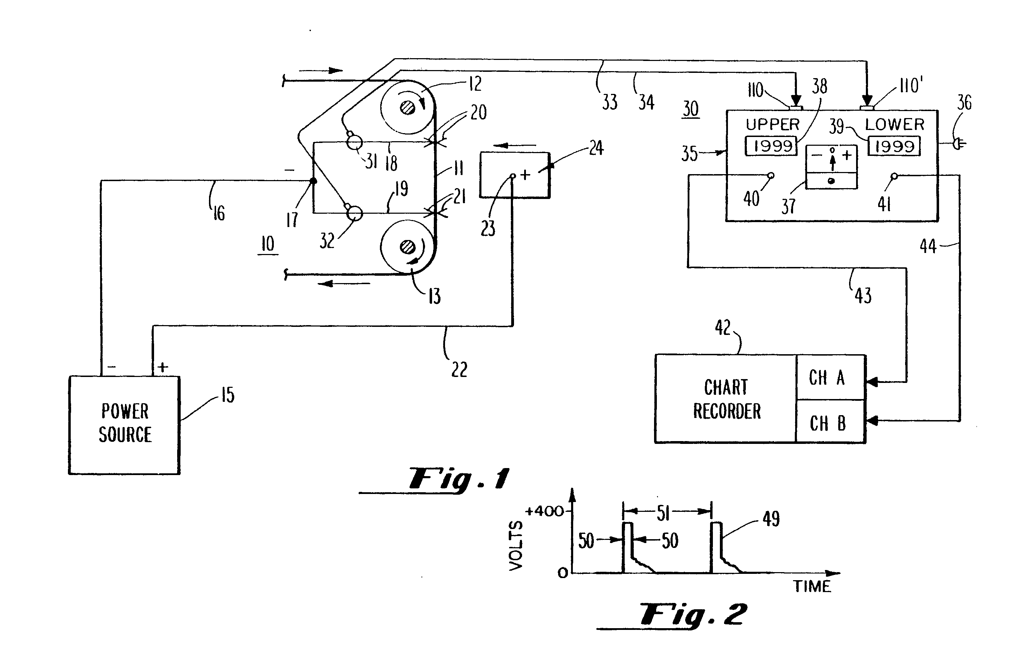

Fig. 1 depicts a traveling wire electric discharge machine, indicated generally by reference numeral 10, of conventional manufacture incorporating a monitor system 30 of the invention. The EDM machine 10 includes a so-called traveling wire electrode 11 fed from a feed reel (not depicted) over a pair of insulated pulleys 12 and 13 directing the wire past a workpiece 24 to a take-up reel (also not depicted ). The reels are rotated by conventional means (also not depicted ). The wire forming electrode 11 is typically from about 3 mils to 1O mils in outer diameter (about .076 mm to .254 mm O.D.) and formed from brass or molybdenum. The EDM includes a power source 15 outputting pulses of direct current. A heavy power cable 16 is coupled to one side (negative) of the power source 15 and branches at point 17 into first and second power supply cables 18 and 19, respectively. Each of the cables 18 and 19 is mechanically and electrically coupled with a contact 20 and 21 approximately equally spaced on either side of the workpiece 24,upstream and downstream along the traveling wire 11. The contacts 20 and 21 are often constructed from a carbide material to enhance wear and are often referred to as carbide contacts or "carbides". A second power cable 22 is supplied extending from the remaining (positive) side of the EDM power source 15 and is connected at an end remote from the power source 15 through a contact 23 with the electrically conductive workpiece 24 for cutting by the traveling wire 11.

The EDM power source 15 outputs pulses of direct current which pass through the cables 16, 18, 19 and 22, contacts 20, 21 and 23, the traveling wire 11 and workpiece 24. Transfer of current between the workpiece 24 and traveling wire 11 causes a build up of heat on the workpiece 24 sufficient to remove material of the workpiece 24 resulting in its cutting.

Referring to Fig. 2, exemplary wave forms 49 of direct current pulses outputted by the EDM power source 15 are depicted. The current is generated by a relatively high voltage (about 400 volts) across the poles of the power source 15. Pulse duration, indicated by arrows 50, ranges anywhere from about 0.25 to 1.5 microsecond. Pulse frequency, indicated by arrowed line 51 between the leading edge of sequential pulses, is typically between about 5 to 50 kilohertz. The trailing edge of each pulse 49 is perturbed by the actual cutting process.

The operation of the traveling wire EDM described above with respect to Figs 1 and 2 is typical of the operations of the traveling wire electric discharge machines manufactured by Agie and Mitsubishi.

Referring again to Fig. 1, to monitor the condition of the traveling wire contacts 20 and 21, a pair of sensors 31 and 32 are coupled to separate ones of the first and second power cable branches 18 and 19, respectively, for sensing current carried by the respective connected cable 18 and 19 and generating a signal having a characteristic related to the electric current carried . Leads 33 and 34 couple each of the sensors 31 and 32, respectively, with an operator display box 35 located remotely from the sensors 31 and 32 and power supply cables 18 and 19. The operator display box 35 is provided with a plug 36 for coupling the box 35 with a conventional alternating electric current supply. The operator display box includes a null meter 37 for displaying differences in the currents being carried by the two branch power cables 18 and 19 and a pair of digital voltage display devices 38 and 39 for indicating voltage levels proportional to the current carried by each of the respective cables 18 and 19. Analog voltmeters might also be used. Connectors 40 and 41 are also provided on the operator display box 35 for coupling a chart recorder 42 or other display or permanent record device with the operator display box 35. Leads 43 and 44 couple each of the connectors 40 and 41 with appropriate connectors (not depicted) in the chart recorder 42.

One type of device suitable for use as sensors 31 and 32 is a wide band pulse current type low output impedance transformer. Such a transformer is the Model 411 transformer manufactured and supplied in the United States by Pearson Electronics, Inc., Palo Alto, California. This transformer has a tubular or doughnut-shaped configuration with a central opening through which the power supply cable 18 or 19 is passed. Coupling between the power supply cable 18 or 19 and the transformer is inductive. The transformer is located as close as possible to the monitored contact 10 for accurate measurement. The transformer has a frequency response sufficiently fast so as to accurately sense the direct current pulses generated by the EDM power source 15 and output pulses having voltage levels proportional to the current in the direct current pulses carried by the coupled power cable. In particular, the transformer has an output voltage/amp ratio of 0.1, a rise time of 10 nanoseconds for a step-function current pulse, a drop of 0.5% per millisecond for the top of a square wave or pulse, a pulse I of 0.19 ampere per second max. and frequency response of 1 hertz to 35 megahertz at 3 dB points. The transformer can be coupled with the operator display box 35 by a conventional 50 ohm coaxial cable.

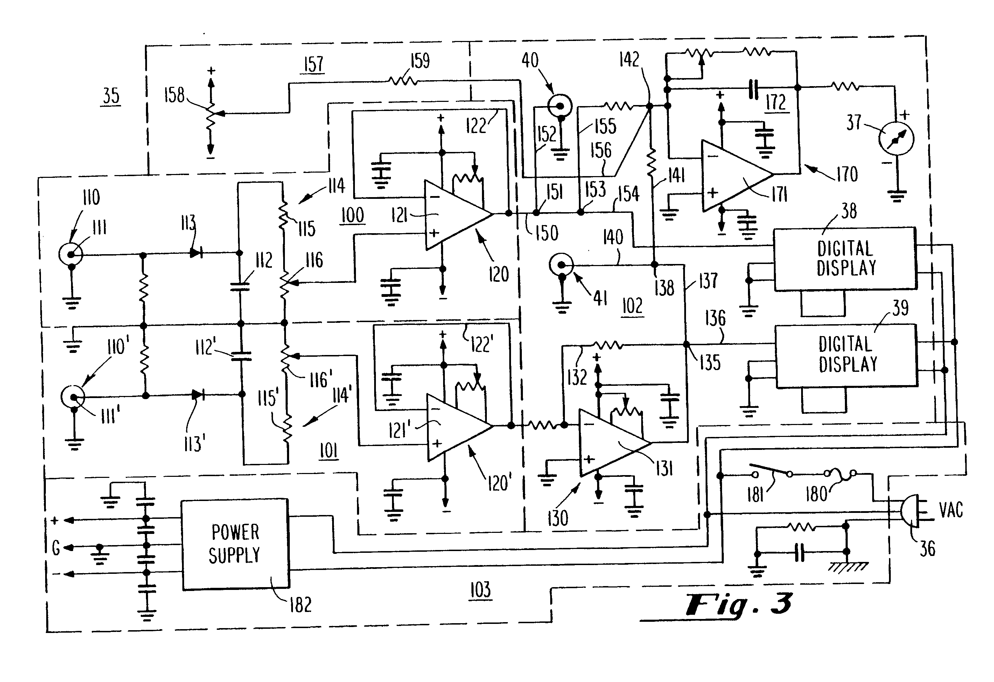

Referring now to Fig. 3, the electrical components of the operator display box 35 are depicted. The box 35 includes a first current detection subsystem or circuit 100 and second current detection subsystem or circuit 101, a display subsystem or circuit 102 and a power supply subsystem or circuit 103.

Each of the detector circuit subsystems 101 and 102 is identical and includes a coaxial connector 110 or 110' for receiving an end of one of the cables 33 or 34, with a pin connection 111 or 111' outputting the voltage level pulses generated by the remotely positioned transformer/sensor 31 or 32, respectively. A capacitor 112 or 112' is coupled to the pin 111 or '111 through a diode 113 or 113' and a voltage divider network 114 or 114', formed by fixed resistor 115 or 115' and a potentiometer 116 or 116' in series, is coupled in parallel with the capacitor 112 or 112', respectively. A high impedance signal generator 120 or 120', controlled by an analog voltage level picked off of the potentiometer 16 or 116', is provided by configuring an operational amplifier 121 or 121' by negative feedback line 122 or 122' as a unity gain high impedance source follower. Each of the generators 120 and 120' outputs a voltage level signal having a voltage magnitude proportional to the magnitude of the analog voltage level generated at the potentiometer 116 or 116', respectively, and to the amount of current passed on the power cables 18 and 19, respectively. An inverter 130 is conventionally provided in the display circuit subsystem 102 by another operational amplifier 131 and related feedback circuit 132 configuring the amplifier 131 as a unity gain inverter. The output from the inverter 130 is branched from the feedback circuit 132 at junction 135 and carried along line 136 to one of the voltage digital display devices 39. A second line 137 from the junction 135 branches again at a junction 138 where the inverted analog voltage level signal is carried to connector 41 by a line 140 for outputting the signal to the chart recorder 42 of Fig. 1 and summing junction 142 by line 141. The analog voltage level signal outputted by the signal generator 120 of the first detection circuit subsystem 100 is outputted from amp 121 on line 150, branched the junction 151 through a line 152 to connector 40 for feeding the signal to the chart recorder 42 and again at junction 153 for carrying the signal to the digital voltage display device 38 along line 154 and to the summing junction 142 along the line 155. Also connected to the summing junction 142 is a line 156 from a centering subcircuit 157. The centering subcircuit 157, actually part of the display circuit 102, is used to balance the output of the first detection circuit 100 and the inverted output of the second detection circuit 101 when new carbides are installed so as to create a virtual ground point at the junction 142. Another operational amplifier 171 coupled with the summing junction 142 is provided for driving the null meter 37. Related feedback circuitry 172 is provided for suitably scaling the output of the amplifier 171 for meter 37.

The power supply subsystem 103 includes the plug 36, fuse 180, on-off switch 181 and a conventional power supply 182 for generating ± 15 volt voltages and ground for powering the various amplifiers and the centering circuit 157.

Operation of the device is as follows. New contacts 20 and 21, including carbide contacts in proper operating condition, will offer the least resistance and hence the greatest current flow along the branch cables 18 and 19. When new contacts are installed, the potentiometers 116 and 116' are adjusted so that the outputs of the two signal generators 120 and 120' are approximately equal and of sufficiently high voltage that a maximum meter reading will be indicated on the digital display voltmeter devices 38 and 39, respectively. (If desired, circuits can also be conventionally provided as depicted in Fig. 3, for zeroing the amps 121, 121' and 131.) Also, the potentiometer 158 of the centering circuit 157 is adjusted so that the null meter 37 is in balance. Thereafter, pulses generated by each of these remotely located transformers 31 and 32 are integrated by the capacitors 112 and 112', respectively, to yield a long term average analog voltage level. That voltage level, which is proportional to current (in particular average current), is scaled by a constant factor through the voltage divider 114. If there is an abnormal deterioration of one of the contacts effecting current flow through the branch lines 18 and 19, an imbalance will appear on the null meter 37. The degree of imbalance can be determined by the null meter and by the difference in voltage readings on the digital voltage displays 38 and 39. Normal uniform deterioration of the contacts similarly will be represented by decreasing voltages indicated by the digital voltage display devices 38 and 39.

The chart recorder 42 provides a permanent record of the voltage signals generated in response to the currents sensed by the transformers 31 and 32. The chart recorder is provided so that the device need not be continuously monitored in order to detect intermittent problems. The written record further provides a means for recording a history of each particular machining event to compare EDM performance with the resulting workpiece and, in the case of a discrepancy between the quality of the cut of the workpiece and a seemingly nominal recorded record of the process to reveal the possibility of a malfunction in the monitor.

Variations of the invention will occur to those ordinary skilled in the art. Therefore the invention is not limited to the particular embodiment described but is set forth in the following claims.

**Claims**

1. A device for monitoring the condition of a contact (20) in a traveling wire electric discharge machine (10), the machine comprising a wire electrode (11) for passing an electrically conductive workpiece (24), a power source (15) for generating direct current pulses and thereby applying a pulsed D.C. voltage across a gap between the wire electrode (11) and the workpiece (24) to cause a discharge across the gap at a discharge position, the power source (15) being electrically coupled to the contact (20) via a power cable (16,18) and the contact (20) being in electrical contact with the wire electrode (11), the monitoring device comprising:

sensor means in the form of a transformer (31) inductively coupling with the power cable (16,18) and producing at its output a voltage pulse signal in response to the direct current pulses in the power cable, each pulse of the transformer pulse signal having a voltage magnitude proportional to the amount of current in a current pulse carried by the power cable, and display means (35) adapted for remote positioning from said sensor means (31) and responsive to said transformer pulse signal for indicating changes in said current carried by the power cable (16,18),

characterised in that:

said display means (35) comprises an integrating capacitor (112) coupled to said transformer (31) for integrating the voltage pulses of said transformer signal to generate an analog voltage level; a display device (38) for indicating changes in the current carried by said power cable (16,18); and circuit means for coupling the integrating capacitor (112) and the display device (38) and driving the display device in response to said analog voltage level.

2. A device according to claim 1, wherein said circuit means comprises:

a voltage divider (114) coupled in parallel with said capacitor (112); and

a signal generator (120) coupled with said voltage divider for generating a voltage level signal having a magnitude proportional to said analog level.

3. A device of either preceding claim, for further monitoring the condition of a second said contact (21) electrically coupling said power source (15) to said traveling wire electrode (11) through a second power cable (16,19), the device comprising two of said sensor means (31,32) inductively coupling with said first and second power cables respectively, the display means comprising a corresponding pair of said display devices (38,39) coupled to and driven by the first and second sensor means respectively.

4. A device according to claim 3 wherein said display means further comprises: differencing circuit means (170) coupled to said first and second sensor means (38,39) for generating a difference signal related to a difference between currents carried by each of said first and second power cables and coupled to said display means for driving a difference display device (37) with said difference signal.

5. A traveling wire electric discharge machine (10) for cutting an electrically conductive workpiece (24), comprising a wire electrode (11), transport means for directing the wire past the workpiece (24), a power source (15) for generating direct current pulses and thereby applying a pulsed D.C. voltage across a gap between the wire electrode (11) and the workpiece (24) to cause a discharge across the gap at a discharge position, the power source (15) being electrically coupled to a contact (20) via a power cable (16,18) and the contact (20) being in electrical contact with the wire electrode (11), sensor means in the form of a transformer (31) inductively coupling with the power cable (16,18) and producing at its output a voltage pulse signal in response to the direct current pulses in the power cable, each pulse of the transformer pulse signal having a voltage magnitude proportional to the amount of current in a current pulse carried by the power cable, and display means (35) adapted for remote positioning from said sensor means (31) and responsive to said transformer pulse signal for indicating changes in said current carried by the power cable (16,18),

characterised in that:

said display means (35) comprises an integrating capacitor (112) coupled to said transformer (31) for integrating the voltage pulses of said transformer signal to generate an analog voltage level; a display device (38) for indicating changes in the current carried by said power cable (16,18); and circuit means for coupling the integrating capacitor (112) and the display device (38) and driving the display device in response to said analog voltage level.

6. A device according to claim 5, wherein said circuit means comprises:

a voltage divider (114) coupled in parallel with said capacitor (112); and

a signal generator (120) coupled with said voltage divider for generating a voltage level signal having a magnitude proportional to said analog level.

7. A machine according to claim 5 or 6, comprising a second said contact (21) electrically coupling said power source (15) to said traveling wire electrode (11) through a second power cable (16,19), the machine further comprising two of said sensor means (31,32) inductively coupling with said first and second power cables respectively, the display means comprising a corresponding pair of said display devices (38,39) coupled to and driven by the first and second sensor means respectively.

8. A machine according to claim 7 wherein said display means further comprises: differencing circuit means (170) coupled to said first and second sensor means (38,39) for generating a difference signal related to a difference between currents carried by each of said first and second power cables and coupled to said display means for driving a difference display device (37) with said difference signal.

**Revendications**

1. Un dispositif pour surveiller l'état d'un contact (20) dans une machine (10) de décharge électrique à fil circulant, la machine comprenant une électrode filaire (10) qui défile devant une pièce à usiner électriquement conductrice (24), une source de puissance (15) pour former des impulsions de courant continu et pour appliquer une tension continue pulsée dans l'intervalle séparant l'électrode filaire (11) et la pièce (24) de manière à provoquer une décharge dans cet intervalle à la position de décharge, la source de puissance (15) étant couplée électriquement au contact (20) par l'intermédiaire d'un câble de puissance (16, 18) et le contact (20) étant en contact électrique avec l'électrode filaire (11), le dispositif de surveillance comprenant:
un moyen de détection prenant la forme d'un transformateur (31) couplé de manière inductive avec le câble de puissance (16, 18) et produisant à sa sortie un signal impulsionnel de tension en réponse aux impulsions de courant continu dans le câble de puissance, chaque impulsion du signal impulsionnel de transformateur présentant une amplitude proportionnelle à la quantité de courant contenue dans une impulsion de courant transportée par le câble de puissance, et un moyen d'affichage (35) distant dudit moyen de détection (31) et sensible audit signal impulsionnel de transformateur pour indiquer des modifications dans ledit courant transporté par le câble de puissance (16, 18),
caractérisé en ce que :
ledit moyen d'affichage (35) comprend un condensateur d'intégration (112) couplé audit transformateur (31) pour intégrer les impulsions de tension dudit signal de transformateur de manière à former un niveau de tension analogique ; un dispositif d'affichage (38) pour indiquer des variations dans le courant transporté par ledit câble de puissance (16, 18) ; et des moyens de circuit pour coupler le condensateur d'intégration (112) et le dispositif d'affichage (38) et pour commander le dispositif d'affichage en réponse audit niveau de tension analogique.

2. Un dispositif conforme à la revendication 1, dans lequel ledit moyen de circuit comprend :
un diviseur de tension (114) monté en parallèle sur ledit condensateur (112) ; et
un générateur de signal (120) couplé audit diviseur de tension pour engendrer un signal de niveau de tension présentant une amplitude proportionnelle audit niveau analogique.

3. Un dispositif conforme à l'une quelconque des revendications précédentes, pour surveiller en outre l'état d'un deuxième contact (21) couplant électriquement ladite source de puissance (15) à ladite électrode (11) filaire circulante par l'intermédiaire d'un deuxième câble de puissance (16, 19), le dispositif comprenant deux moyens de détection (31, 32) à couplage inductif avec lesdits premier et deuxième câbles de puissance respectivement, le moyen d'affichage comprenant une paire correspondante de dispositifs d'affichage (38, 39) couplés et commandés par les premier et deuxième moyens de détection, respectivement.

4. Un dispositif conforme à la revendication 3, dans lequel ledit moyen d'affichage comprend en outre : un moyen de circuit différentiel (170) couplé auxdits premier et deuxième moyens de détection (38, 39) pour engendrer un signal différentiel lié à une différence entre des courants transportés par chacun desdits premier et deuxième câbles de puissance et couplé audit moyen d'affichage pour commander un dispositif d'affichage de différence (37) avec ledit signal différentiel.

5. Une machine (10) à décharge électrique à fil circulant pour couper une pièce à usiner électriquement conductrice (24), comprenant une électrode filaire (11), des moyens d'entraînement pour faire passer le fil devant la pièce à usiner (24), une source de puissance (15) pour engendrer des impulsions de courant continu et appliquer une tension continue pulsée dans un intervalle séparant l'électrode filaire (11) et la pièce à usiner (24) pour provoquer une décharge dans cet intervalle à une position de décharge, la source de puissance (15) étant électriquement couplée à un contact (20) par l'intermédiaire d'un câble de puissance (16, 18) et le contact (20) étant en contact électrique avec l'électrode filaire (11), un moyen de détection prenant la forme d'un transformateur (31) à couplage inductif avec le câble de puissance (16, 18) et produisant à sa sortie un signal impulsionnel de tension en réponse aux impulsions de courant continu dans le câble de puissance, chaque impulsion du signal impulsionnel du transformateur présentant une amplitude proportionnelle à la quantité de courant contenu dans une impulsion de courant transportée par le câble de puissance, et un moyen d'affichage (35) distant dudit moyen de détection (31) et sensible audit signal impulsionnel du transformateur pour indiquer des modifications dans ledit courant transporté par le câble de puissance (16, 18),
caractérisée en ce que :

ledit moyen d'affichage (35) comprend un condensateur d'intégration (112) couplé audit transformateur (31) pour intégrer les impulsions de tension du signal de transformateur de manière à engendrer un niveau de tension analogique, un dispositif d'affichage (38) pour indiquer des variations dans le courant transporté dans ledit câble de puissance (16, 18) ; et un moyen de circuit pour coupler le condensateur d'intégration (112) et le dispositif d'affichage (38) pour commander le dispositif d'affichage en réponse audit niveau de tension analogique.

6. Un dispositif conforme à la revendication 5, dans lequel ledit moyen de circuit comprend :
. un diviseur de tension (114) monté en parallèle sur ledit condensateur (112) ; et
un générateur de signal (120) couplé avec ledit diviseur de tension pour engendrer un signal de niveau de tension présentant une amplitude proportionnelle audit niveau analogique.

7. Une machine conforme aux revendications 5 ou 6, comprenant un deuxième contact (21) pour coupler électriquement ladite source de puissance (15) à ladite électrode filaire circulante (11), à travers un deuxième câble de puissance (16, 19), la machine comprenant en outre deux moyens de détection (31, 32) inductivement couplés avec lesdits premier et deuxième câbles de puissance respectivement, le moyen d'affichage comprenant une paire correspondante desdits dispositifs d'affichage (38, 39) commandés par les premier et deuxième moyens de détection auxquels ils sont couplés, respectivement.

8. Une machine conforme à la revendication 7, dans laquelle ledit moyen d'affichage comprend en outre :
un moyen de circuit différentiel (170) couplé auxdits premier et deuxième moyens de détection (38, 39) pour engendrer un signal différentiel lié à une différence entre des courants transportés par chacun desdits premier et deuxième câbles de puissance et couplés auxdits moyens d'affichage pour commander un dispositif d'affichage de différence (37) avec ledit signal de différence.

## Ansprüche

1. Vorrichtung zur Überwachung des Zustandes eines Kontaktes (20) in einer Drahtelektroerosionsmaschine (10), die eine Drahtelektrode (11) zur Vorbeiführung an einem elektrisch leitenden Werkstück (24), eine Stromquelle (15) zur Erzeugung von Gleichstromimpulsen und dadurch zum Anlegen einer pulsierenden Gleichspannung an einen Luftspalt zwischen der Drahtelektrode (11) und dem Werkstück (24) aufweist, um eine Entladung über den Spalt an einer Entladeposition hervorzurufen, wobei die Stromquelle (15) elektrisch mit dem Kontakt (20) über ein Stromkabel (16, 18) verbunden ist und der Kontakt (20) in elektrischer Verbindung steht mit der Drahtelektrode (11), wobei die Überwachungsvorrichtung aufweist:
eine Sensoreinrichtung in der Form eines Wandlers (31), der induktiv mit dem Stromkabel (16, 18) gekoppelt ist und an seinem Ausgang ein Spannungsimpulssignal in Abhängigkeit zu den Gleichstromimpulsen im Stromkabel erzeugt, wobei jeder Impuls des Wandlerimpulssignales eine Spannungsgröße hat, die proportional ist zur Größe des Stromes des Stromimpulses, der vom Stromkabel geführt wird, und eine Anzeigeeinrichtung (35) zur Fernpositionierung gegenüber der Sensoreinrichtung (31), die auf das Wandlerimpulssignal anspricht, um Änderungen des vom Stromkabel (16, 18) geführten Stromes anzuzeigen,
dadurch gekennzeichnet, daß die Anzeigeeinrichtung (35) einen integrierenden Kondensator (112) aufweist, der an den Wandler (31) angeschlossen ist, um die Spannungsimpulse des Wandlersignales zum Zwecke der Erzeugung eines Analogspannungspegels zu integrieren; eine Anzeigeeinheit (38) zum Anzeigen von Änderungen des von dem Stromkabel (16, 18) geführten Stromes; und eine Schaltungseinrichtung zur Kopplung des integrierten Kondensators (112) mit der Anzeigeeinheit (38) und zur Steuerung der Anzeigeeinheit abhängig von dem Analogspannungspegel.

2. Vorrichtung nach Anspruch 1,
**dadurch gekennzeichnet, daß** die Schaltungseinrichtung aufweist:
einen Spannungsteiler (114), der parallel zum Kondensator (112) geschaltet ist, und
einen Signalgenerator (120), der mit dem Spannungsteiler zur Erzeugung eines Spannungspegelsignales gekoppelt ist, dessen Größe proportional zum Analogwert ist.

3. Vorrichtung nach einem der vorangehenden Ansprüche, zur weiteren Überwachung des Zustandes eines zweiten Kontaktes (21), der die Stromquelle (15) elektrisch mit der sich bewegenden Drahtelektrode (11) über ein zweites Stromkabel (16, 19) verbindet, wobei die Vorrichtung zwei Sensoreinrichtungen (31, 32) aufweist, die induktiv jeweils mit dem ersten bzw. zweiten Stromkabel gekoppelt sind, und wobei die Anzeigeeinrichtung ein entsprechendes Paar von Anzeigeeinheiten (38, 39) aufweist, die an die erste bzw. zweite Sensoreinrichtung gekoppelt ist und die erste bzw. zweite Sensoreinrichtung steuert.

4. Vorrichtung nach Anspruch 3, bei welcher die Anzeigeeinrichtung eine Differenzschaltung (170) aufweist, die an die erste und zweite Sensoreinrichtung (38, 39) zur Erzeugung eines Differenzsignals bezüglich einer Differenz zwischen den Strömen, die jeweils vom ersten und zweiten Stromkabel geleitet werden, und die an die Anzeigeeinrichtung zur Steuerung einer Differenzanzeigeeinrichtung (37) durch das Differenzsignal angeschlossen ist.

5. Drahtelektroerosionsmaschine (10) zum Schneiden eines elektrisch leitenden Werkstücks (24), mit einer Drahtelektrode (11), einer Transporteinrichtung, welche den Draht an dem Werkstück (24) vorbei ausrichtet, einer Stromquelle (15) zur Erzeugung von Gleichstromimpulsen und zum Anlegen einer pulsierenden Gleichspannung über einen Spalt zwischen der Drahtelektrode (11) und dem Werkstück (24), um eine Entladung über den Spalt an einer Entladeposition hervorzurufen, wobei die Stromquelle (15) elektrisch mit einem Kontakt (20) über ein Stromkabel (16, 18) verbunden ist und der Kontakt (20) elektrisch mit der Drahtelektrode (11) in Verbindung steht, mit einer Sensoreinrichtung in Form eines Wandlers (31), der induktiv mit dem Stromkabel (16, 18) gekoppelt ist und an seinem Ausgang ein Impulsspannungssignal abhängig von den Gleichstromimpulsen in dem Stromkabel erzeugt, wobei jeder Impuls des Wandlerimpulssignales eine Spannungsgröße hat, die proportional zum Stromwert in dem Stromimpuls ist, der von dem Stromkabel geführt wird, und mit einer Anzeigeeinrichtung (35), die zur Fernpositionierung gegenüber der Sensoreinrichtung (31) geeignet ist und auf das Wandlerimpulssignal zur Anzeige von Änderungen in dem von dem Stromkabel (16, 18) geführten Strom anspricht,
dadurch gekennzeichnet, daß die Anzeigeeinrichtung (35) einen integrierenden Kondensator (112) aufweist, der mit dem Wandler (31) zum Integrieren der Spannungsimpulse des Wandlersignales verbunden ist, um einen Analogspannungswert zu erzeugen,
daß eine Anzeigeeinheit (38) zur Anzeige von Änderungen in dem vom Stromkabel (16, 18) geführten Strom vorgesehen ist, und
daß eine Schaltungseinrichtung vorgesehen ist, um den integrierenden Kondensator (112) und die Anzeigeeinheit (38) miteinander zu verbinden und die Anzeigeeinheit abhängig von dem Analogspannungswert zu steuern.

6. Maschine nach Anspruch 5,
dadurch gekennzeichnet, daß die Schaltungseinrichtung aufweist:
einen Spannungsteiler (114), der parallel zum Kondensator (112) geschaltet ist, und
einen Signalgenerator (12), der mit dem Spannungsteiler zur Erzeugung eines Spannungspegel-Signals verbunden ist, dessen Größe proportional zu dem Analogwert ist.

7. Maschine nach Anspruch 5 oder 6,
dadurch gekennzeichnet, daß ein zweiter Kontakt (21) vorgesehen ist, der elektrisch die Stromquelle (15) mit der sich bewegenden Drahtelektrode (11) über ein zweites Stromkabel (16, 19) verbindet,
daß die Maschine weiterhin zwei der Sensoreinrichtungenen (31, 32) aufweist, die induktiv jeweils mit dem ersten bzw. Stromkabel verbunden sind, wobei die Anzeigeeinrichtung ein entsprechendes Paar von Anzeigeeinheiten (38, 39) enthält, welche an die erste bzw. zweite Sensoreinrichtung angeschlossen sind.

8.  Maschine nach Anspruch 7, dadurch gekennzeichnet, daß die Anzeigeeinrichtung eine Differenzschaltung (170) aufweist, die mit der ersten und zweiten Sensoreinrichtung (38, 39) zur Erzeugung eines Differenzsignales in Bezug auf die Differenz zwischen den Strömen verbunden ist, welche von jeweils dem ersten bzw. zweiten Stromkabel geführt werden, und ferner mit der Anzeigeeinrichtung verbunden ist, um eine Differenz-Anzeigeeinrichtung (37) durch das Differenzsignal anzusteuern.

Fig. 1

Fig. 2

**Fig. 3**

EP 0 248 126 B1